# EUROPEAN PATENT SPECIFICATION

(11) **EP 1 256 042 B1**
(45) Date of publication and mention of the grant of the patent: **20.07.2005**
(21) Application number: 01916082.9
(22) Date of filing: 12.02.2001
(51) Int. Cl.: G06F 1/00

(54) **METHOD AND SYSTEM FOR SECURE DOWNLOADING OF SOFTWARE**
METHODE UND GERÄT FÜR SICHERES FERNLADEN VON SOFTWARE
PROCEDE ET APPAREIL DESTINES A FOURNIR UN CONTROLE SECURISE DE TELECHARGEMENT DE LOGICIEL OU DE CODE MICROPROCESSEUR ET UN FONCTIONNEMENT SECURISE D'UN DISPOSITIF INFORMATIQUE RECEVANT UN CODE TELECHARGE

(30) Priority: 17.02.2000 US 505890
(43) Date of publication of application: 13.11.2002
(73) Proprietor: General Instrument Corporation, Horsham, Pennsylvania 19044 (US)
(72) Inventor: GOFFIN, Glen, Fountainville, PA 18923 (US); BOOTH, Robert, Jamison, PA 18929 (US)
(74) Representative: Cooper, John
(86) International application number: PCT/US2001/004424
(87) International publication number: WO 2001/061437

(56) References cited:
- EP-A- 0 845 733
- US-A- 5 442 645
- US-A- 5 892 904
- US-A- 5 940 513

## Description

### FIELD OF THE INVENTION

The present invention relates to the field of transmitting software or firmware programming code to a recipient computing device, such as a set-top terminal. The present invention also relates to the field of controlling the downloading of such code to the computing device in a secure manner such that no virus or alteration in the code is permitted, and such that the code is not freely transferable to other computing devices. The present invention further relates to the field of secure operation of a computing device that executes downloaded program code so as to prevent that computing device from being used to gain unauthorized access to services.

The present invention further relates to the field of secure operation of the computing device so as to prevent the execution of a virus or other code that may impair the computing device or cause it to function in an unauthorized manner.

### BACKGROUND OF THE INVENTION

Communication in modern society has been greatly enhanced by the advent of such widespread data networks as public telephone systems, the world wide web, and cable and satellite television systems. Particularly with the world wide web and other computer networks, messages and even executable software can be readily transmitted to remote locations. The electronic transmission of software can be used to commercially distribute such software or to upgrade the existing software of purchasers or data terminals connected to a network.

While such ready access to software and other information is extremely valuable and advantageous, security concerns are also raised. A pervasive problem with computing networks, principally the internet, is the spread of computer viruses that destroy data or impair the operation of computerized systems.

An additional problem is the unauthorized sharing or copying of software. Such copying can be extremely expensive to the owner of the copyright in the software who likely spent significant resources to create the software.

These concerns are also raised in the context of cable television systems. In cable television systems, a set-top terminal or box is typically provided by the cable television company to its subscribers. The set-top terminal is connected, for example, between a cable system outlet and the subscriber's television set or computer. The set-top terminal then receives the cable television signal from the headend facility of the cable system operator.

The set-top terminal may perform any of a variety of functions. For example, the set-top terminal may control the subscriber's access to particular channels on the cable network. If the subscriber has not subscribed to "premium" channels, the set-top terminal may restrict the subscriber's access to those channels. Alternatively, the set-top terminal may enable access to those premium channels to which the customer has subscribed.

Additionally, there is a current trend to combine the various data networks available so that each household or office has a single connection to the information superhighway. An example of this trend is the developing ability of cable television networks to also provide internet access. In such systems, the set-top terminal may be an enhanced terminal with a modem that provides a connection to the internet as well as to the cable television signals. The set-top terminal may operate with the associated television set to provide web browsing capability or may be connected to other computer equipment.

The set-top terminal typically includes software or firmware executed by a central processor of the set-top terminal that enables the terminal to perform the various functions it is called upon to perform. There are at least four principal concerns with regard to the software or firmware in a set-top terminal.

First, it is necessary to prevent a user from altering the software or firmware in the set-top box so as to allow unauthorized access to services available over the cable network for which that user has not paid. The commercial viability of the cable system operator may depend on being able to prevent unauthorized and unpaid access to system services. Such services may include virtually any electronic data service, for example, a range of television channels, premium channels, pay-per-view programming, video-on-demand programming, internet access, electronic mail, telephony, etc.

A related concern is the problem that unauthorized attempts to so modify the software or firmware in a set-top terminal may damage the terminal or cause it to fail. This may be of particular concern to the cable system operator if ownership of the box is retained by the system operator as is often the case. Additionally, damage may be done to the reputation of the set-top box manufacturer, particularly if the cause of the failure of the set-top box, i.e., illicit modification to the set-top box, is successfully concealed.

The unauthorized modification of the software or firmware of a set-top terminal may also adversely effect the cable system itself. This adverse effect may even extend to causing part or all of the cable system to fail. Such a result may be intentional or unintentional. In either event, the operator of the cable system may be significantly injured by both damage to the cable system and customer dissatisfaction.

Second, the software or firmware in the set-top terminal should be protected from the intentional and malicious introduction of a computer virus that will impair the function of the set-top terminal. This is particularly true where the set-top terminal is being used to connect to the internet.

Third, the software or firmware in the set-top terminal may need to be periodically upgraded or modified as the cable system evolves or as the subscriber requests additional services or the removal of services no longer desired. A preferred means of making such modifications to the set-top terminal is to download the upgraded or modified software or firmware over the cable network itself.

This eliminates the need for a technician to visit the location of the set-top terminal. However, it then becomes necessary to provide some security when the new software or firmware is downloaded so that it is not altered when received and stored in the set-top terminal.

Fourth, the software or firmware in a set-top terminal is generally proprietary in nature and may represent a significant investment. Therefore the software or firmware in a set-top box should be protected from unauthorized copying, e.g., for use in another set-top terminal.

Therefore, there is a need in the art for a method and system of securing the downloading of software or firmware, particularly to a set-top terminal in a cable television system, so as to ensure that the software or firmware is transmitted as authorized without alteration or the introduction of a virus. There is a further need in the art for a method and system of preventing modification of the software or firmware stored in and executed by the terminal so as to gain unauthorized access to services. There is a further need in the art for a method and system of preventing illicit copying of software or firmware, particularly from a set-top terminal, for some unauthorized use.

US-A-5 940 513 discloses a system for transmission of programming code in accordance with the pre-characterising part of claim 1.

### SUMMARY OF THE INVENTION

It is an object of the present invention to meet the above-described needs and others.
Specifically, it is an object of the present invention to provide a method and system for securing the downloading of software or firmware, particularly to a set-top terminal in a cable television system, so as to prevent unauthorized alterations of, or the introduction of a computer virus to, the software or firmware during transmission. It is a further object of the present invention to provide a method and system for preventing the unauthorized duplication of software or firmware, particularly in a set-top terminal of a cable television system.

Additional objects, advantages and novel features of the invention will be se forth in the description which follows or may be learned by those skilled in the art through reading these materials or practicing the invention. The objects and advantages of the invention may be achieved through the means recited in the attached claims.

To achieve these stated and other objects, the present invention provides a system for secure transmission of programming code to a computing device, the system comprising:
a data line for receiving blocks of programming code;
a master processor for executing blocks of programming code, each of which is associated with an authentication signature derived from a content of said block of code; and
a memory unit for storing said blocks of programming code for use by said master processor;
characterised by a secure processor within the computing device for independently computing an authentication signature for each said block of programming code and matching said computed authentication signature against said authentication signature transmitted or stored in association with that block of code.

If the computed authentication signature fails to match the transmitted authentication signature, the secure processor takes appropriate action, such as purging the unauthenticated block of code from memory or disabling the computing device.

A second, isolated memory unit connected to the secure processor may be provided for storing data needed by the secure processor to compute authentication signatures. The secure processor may continually re-authenticate the blocks of programming code stored in the memory unit to ensure their continued legitimacy.

The master processor, memory unit and secure processor are preferably all interconnected by a memory bus. To avoid conflicts between the master and secure processors, the secure processor preferably accesses the memory unit only during bus cycles in which the master processor is not using the memory bus. A memory bus controller may be provided to police this arrangement and control access to the memory bus by the main and secure processors.

Preferably, the memory unit comprises an interim memory and static memory. The master processor writes the downloaded blocks of code to the interim memory initially. After the secure processor has authenticated the blocks of code, the blocks of code are transferred to the static memory.

In a preferred embodiment, the computing device is a set-top terminal incorporating the master processor, memory unit and secure processor. The input data line is a connection to a cable television system.

In such an embodiment, an entitlement management message may be associated with the blocks of programming code. The secure processor will then prevent further storage, use of execution of the blocks of programming code unless the entitlement management message matches a predetermined entitlement management message stored by the secure processor. This allows selective set-top terminals to be reprogrammed by a broadcast of new programming code to all the set-top terminals in the system indiscriminately.

As an additional security measures, the blocks of code may be encrypted when received by the master processor. The secure processor would preferably then include a decrypter, for example executable decryption software, for decrypting the encrypted blocks of code.

The present invention also encompasses a method of making secure transmission of programming code to a computing device, the method comprising:
computing an authentication signature for each of one or more blocks of programming code newly received or stored in a memory unit with an algorithm, said authentication signature being computed based on a numeric content of that block of programming code; and
comparing said computed authentication signature to an authentication signature transmitted or stored is association with that block of programming code, said transmitted authentication signature having been generated with said algorithm;
characterised in that said computing and comparing are performed with a secure processor which is separate from a master processor for executing said blocks of code.

### BRIEF DESCRIPTION OF THE DRAWINGS

The accompanying drawings illustrate the present invention and are a part of the specification. Together with the following description, the drawings demonstrate and explain the principles of the present invention.
Fig. 1 is a first embodiment of a computing device, such as a set-top terminal of a cable television system, according to the present invention.
Fig. 2 is a second embodiment of a computing device according to the present invention.

### DETAILED DESCRIPTION OF THE PREFERRED EMBODIMENTS

Using the drawings, the preferred embodiments of the present invention will now be explained.

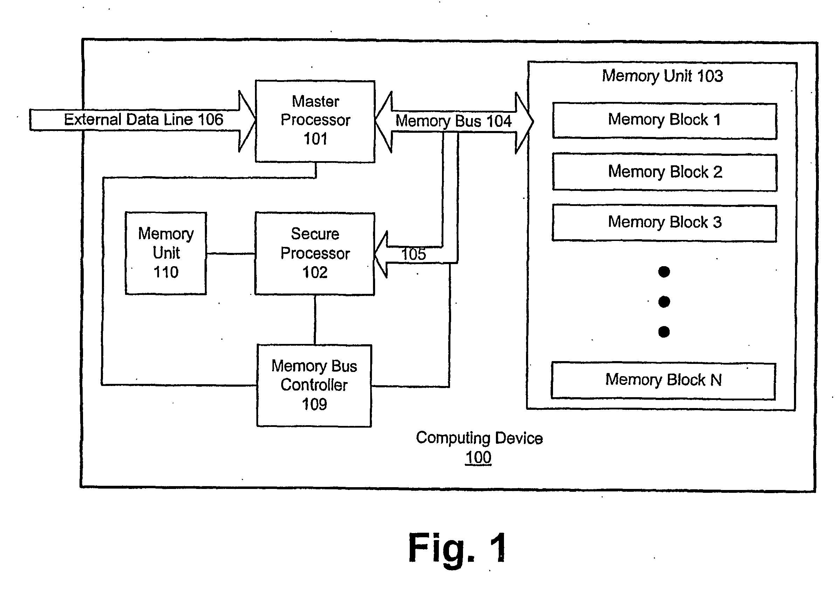

Fig. 1 illustrates a computing device (100) according to the present invention. The computing device (100) may be any device which downloads software or firmware from a remote source over a data line (106) and stores the same for later execution. In a preferred embodiment, the computing device (100) is a set-top terminal in a cable television system, and the data line (106) is an external connection to the cable signal provider. Alternatively, however, the data line (106) could be connected to any external port of the computer device or could be an internal data line of the computing device (100) over which someone may introduce programming code to the device (100), particularly to the master processor (101). As used herein, programming "code" includes, but is not limited to, bootcode, BIOS (basic input/output sofware) code, operating system software or firmware, device driver software or firmware, network protocol software or firmware, application software (e.g., web browsers, electronic program guides, e-mail, chat, etc.), web pages and graphics images.

Under the principles of the present invention, the computing device (100) includes two distinct processors. The first is a master processor (101) which may be, for example, a central processing unit. The master processor (101) is the processor which executes object code to perform the functions of the computing device (100). The second processor is a secure processor (102) that is used to authenticate code downloaded over the data line (106) so as to prevent the introduction of a virus or code which has been altered during transmission, or an unauthorized code object. The secure processor (102) also may continually re-authenticate code previously received and stored in a memory unit (103) to prevent unauthorized tampering with or additions to the executable code and data resident in the set-top terminal (100).

Under the principles of the present invention, when software or firmware is to be downloaded to the computing device (100), the legitimate sender will break the code being sent into blocks or packets. The content of each block or packet of code data is then used to compute an authentication signature using an algorithm which may require one or more keys as will be understood by those skilled in the art.

The data blocks are then transmitted, in association with the computed authentication signature, to the master processor (101) over the external data line (106). The master processor (101) using a memory bus (104) writes the downloaded code to a memory unit (103). The memory unit (103) may be any form on non-volatile, long-term electronic data storage device including, for example, an electronic memory device, a magnetic hard drive or an optical or magento-optical disc drive.

The memory unit (103) is divided into memory blocks (Block 1 to Block N). These memory blocks may correspond to physical sections of the memory unit (103) in which data can be stored. The memory blocks may also preferably correspond to the blocks or packets of data into which the software or firmware is partitioned during the downloading.

The secure processor (102) has a connection (105) to the memory bus (104) and thence to the memory unit (103). After the software or firmware has been downloaded into the memory unit (103), the secure processor (102) will then access each memory block. The secure processor (102) is programmed to duplicate the algorithm used by the legitimate code sender to generate the authentication signature of each block of code.

Consequently, the secure processor (102) can authenticate the code received by the master processor (101) and stored in the memory unit (103).

As an alternative, the code blocks may be initially received by the secure processor (102) rather than the master processor (101). In such a scenario, the secure processor (102) authenticates the code blocks before storing them in the memory (103). An separate interim memory unit or a specified section of the memory unit (103) may be used to store code blocks being authenticated by the secure processor (102) before those code blocks are cleared for storage in the long-term memory of the memory unit (103).

The authentication process will be now described in more detail. The secure processor (102), using the code in each memory block as an input, re-computes the authentication signature based on the numeric content of the code block and any keys used by the legitimate sender. The authentication signature computed by the secure processor (102) is then compared by the secure processor (102) to the authentication signature transmitted in association with that block of code.

If the signatures match, the code in that memory block is authenticated as having been transmitted by an authorized sender without alteration and without the introduction of a dangerous virus. If, on the other hand, the authentication signatures do not match, or the data block does not include an authentication signature at all, the secure processor (102) determines that the code has been altered, perhaps to include a virus, during transmission or has been sent by an unauthorized sender who has no authority to reprogram the computing device (100). The secure processor (102) can then erase or disable the adulterated memory block or blocks.

Alternatively, the secure processor (102) can disable the entire computing device (100) requiring the intervention of a technician or a signal from the system operator to re-initialize the device (100). This may assist the service provider to identify individuals who have attempted unauthorized alterations to the software or firmware in the computing device (100). Such a feature is particularly of interest if the computing device (100) is a set-top terminal of a cable television system as in the preferred embodiment.

The secure processor (102) may be hard-wired or firm-wired to compute the authentication signatures of the data blocks. For more flexibility, the secure processor (102) may operate by executing instructions in an internal memory device or an external memory unit (110).

Because the response to unauthorized or adulterated programming originates from the relatively isolated secure processor (102) rather than the main processor (101), it is inherently more difficult to anticipate and defeat. Thus, the system of the present invention which comprises two distinct processors is inherently more secure than previous systems.

In addition to authenticating blocks of code newly received in the computing device (100), the secure processor (102) will also preferably make a periodic sweep of the code blocks in the memory unit (103) to re-authenticate those code blocks thereby insuring that the code in the memory unit (103) has not be altered or modified by an unauthorized party.

It is as important to protect the continued integrity of executable programming code already stored in the memory unit (103) as to guard against the introduction of new, unauthorized or adulterated code.

The operation of the secure processor can be kept from interfering with or slowing the operation of the computing device (100) by requiring the secure processor (102) to access the memory blocks of the memory unit (103) during "stolen" bus cycles.

This means that the secure processor (102) is only allowed to access the memory unit (103) during bus cycles for which the master processor (101) is occupied with internal processing and is not accessing the memory bus (104).

For this purpose, a memory bus controller (109) is preferably provided. The memory bus controller (109) regulates the access to the bus of the two processors (101) and (102). The memory bus controller (109) may also monitor activity on the bus (104) directly. Preferably, the memory bus controller (109) responds to the master processor (101) so that when the master processor (101) is not using the memory bus (104), the memory bus controller (109) grants access to the memory bus (104) to the secure processor (102).

With the secure processor (102) stealing bus cycles, the secure processor (102) can be used to constantly authenticate and re-authenticate the code blocks in the memory unit (103) to prevent tampering. No loss of speed or inference with the operation of the main processor (101) results.

As an added security measure, the secure processor (102) can also be programmed to monitor the number of bus cycles it receives in any specified period of time. If the number of bus cycles made available to the secure processor (102) falls below a predetermined threshold, the secure processor (102) can be programmed to assume that the set-top box has been tampered with. The secure processor (102) can then initiate an appropriate response such as shutting down the operation of the set-top box and/or signaling the system operator to advise of the problem and request a service call by an authorized technician.

The present invention can also be used to prevent the unauthorized copying of code in the computing device (100) for use in another computing device. If the second computing device to which the code is being copied includes a secure processor (102), that processor (102) will be unable to authenticate the illicitly copied code without the algorithm and/or keys held by the original secure processor.

Alternatively, if the second computing device to which the code is copied does not authenticate code blocks, the authentication signature embedded in the code can be used, as will be clear to those skilled in the art, to disrupt normal execution of the code by a computer not programmed to recognize, extract and make use of the authentication signature.

For additional security, the code being downloaded over the data line (106) may be encrypted. The secure processor (102) could then also be used to decrypt the code, block by block, in the memory unit (103). Such encryption will further prevent the unauthorized copying of the code for use elsewhere.

In the application of the present invention to a set-top terminal in a cable television system, the problem may arise in which the set-top terminals of some subscribers who are receiving premium services need to receive upgraded software, while other subscribers receiving other or lesser services need no programming modification. The present invention can be used to address this problem by appending an entitlement management message to the code blocks being transmitted. The entitlement management message may be appended to or embedded in the authentication signature or may be an entirely separate string.

The entitlement management message will indicate which class of set-top terminals are to accept and implement the downloading code. The secure processor (102) can then compare the entitlement management message in the downloading code with a complementary message specific to the terminal (100) in which the secure processor resides (102). The complementary entitlement management message may be stored in memory unit (110).

If the complementary entitlement management message of the secure processor (102) matches that associated with the downloading code, then the secure processor (102) will proceed to authenticate and allow the further storage, use or execution of the downloaded code. In this way, code can be broadcast over the cable network (106) to all the set-top terminals in the system with only a selected set of set-top terminals accepting and implementing the new code.

The secure processor (102) can also play a role in securing the integrity of the programming code stored in the memory unit (103) as that code is executed. For example, before the master processor (101) can execute stored programming code, the code is transferred from long-term memory, e.g. FLASH memory, to RAM (random access memory). The secure processor (102) can be used to transfer the code from long-term memory to RAM and can re-authenticate each block of code incident to that transfer.

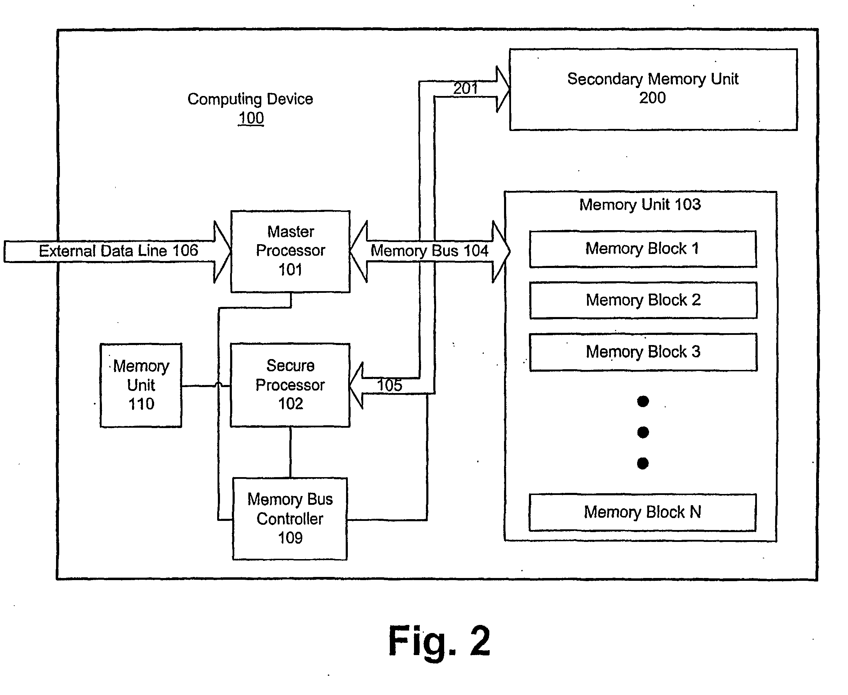

Fig. 2 illustrates a second embodiment of the present invention. The principle behind this embodiment is that a second memory unit for storing downloaded code is provided. With two memory units storing code, one is used as a temporary or interim storage area where downloaded data is written and stored initially until it is authenticated by the secure processor (102). After the secure processor (102) has authenticated the downloaded code, the code is transferred from the temporary storage area to long-term, static storage from whence it is accessed and executed by the master processor (101) as needed.

As shown in Fig. 2, a secondary memory unit (200) is connected (201) to the memory bus (104). The secondary memory unit (200) may be a hard drive or some other memory device and may even be external to the computing device (100). Either memory unit (200) or (103) may be used as the temporary storage, and either may be used as the long-term storage depending on the particular application.

An alternative approach to the present invention without employing two separate processors is to have a secure software or firmware task running on the main processor (101) as a "background" task. Such a secure task could perform all the functions described above for the secure processor (102), including (a) continual sweeping of the protected memory to validate authentication signatures, (b) disabling the computing device functions after a failure to properly authenticate a memory block, (c) checking for proper entitlements as part of background authentication process thus enabling access control of applications, (d) authentication and entitlement validation at the time downloaded code is received, and (e) possible address resolution and linking of the downloaded code.

If the secure task can be carefully design to resist being hacked into or cracked, then the use of a background secure task provides a simple way to obtain many of the advantages of the present invention without requiring the replacement of existing computing devices to provide devices having the two processor system (101 and 102) described above.

The background task can also be backed up by a "watchdog" task that would timeout if not regularly prompted by the background task. In this way, if the background task is somehow defeated and deactivated, the watchdog task will no longer be prompted and can then take appropriate action such as deactivating the set-top terminal and/or signaling the system operator via the headend facility. Additionally, the prompting between the background and watchdog tasks can use a secure handshake that would be very difficult to counterfeit.

The preceding description has been presented only to illustrate and describe the invention. It is not intended to be exhaustive or to limit the invention to any precise form disclosed. Many modifications and variations are possible in light of the above teaching.

The preferred embodiment was chosen and described in order to best explain the principles of the invention and its practical application. The preceding description is intended to enable others skilled in the art to best utilize the invention in various embodiments and with various modifications as are suited to the particular use contemplated. It is intended that the scope of the invention be defined by the following claims.

## Claims

1. A system for secure transmission of programming code to a computing device (100), the system comprising:
a data line (106) for receiving blocks of programming code;
a master processor (101) for executing blocks of programming code, each of which is associated with an authentication signature derived from a content of said block of code; and
a memory unit (103) for storing said blocks of programming code for use by said master processor (101);
**characterised by** a secure processor (102) within the computing device (100) for independently computing an authentication signature for each said block of programming code and matching said computed authentication signature against said authentication signature transmitted or stored in association with that block of code.

2. The system of claim 1, wherein if said computed authentication signature fails to match said transmitted authentication signature, said secure processor (102) disables said computing device (100).

3. The system of claim 1, wherein if said computed authentication signature fails to match said transmitted authentication signature, said secure processor (102) resets said computing device (100) .

4. The system of claim 1, wherein if said computed authentication signature fails to match said transmitted authentication signature, said secure processor (102) signals for an authorised service call for said computing device (100).

5. The system of claim 1, wherein said master processor (101), memory unit (103) and secure processor (102) are interconnected by a memory bus (104,105), and said secure processor (102) accesses said memory unit (103) only during bus cycles in which said master processor (101) is not using said memory bus (104,105).

6. The system of claim 5, further comprising a memory bus controller (109) for controlling access to said memory bus (104,105) by said main (101) and secure (102) processors.

7. The system of claim 1, wherein:
said memory unit comprises an interim memory (103) and a static memory (200);
new blocks of code received over said data line (106) are written to said interim memory (103); and
after said secure processor (102) has authenticated said blocks of code, the blocks of code are transferred to said static memory (200).

8. The system of claim 1, further comprising an entitlement management message associated with said blocks of programming code, wherein said secure processor (102) will prevent further storage, use or execution of said blocks of programming code unless said entitlement management message matches a predetermined entitlement management message stored by said secure processor (102).

9. The system of claim 1, wherein:
said computing device (100) is a set-top terminal incorporating said master processor (101), memory unit (103) and secure processor (104); and
said input data line (106) is a connection to a cable television system.

10. The system of claim 1, further comprising a second, isolated memory unit (200) connected to said secure processor (102).

11. The system of claim 1, wherein said secure processor (102) periodically re-authenticates said blocks of programming code stored in said memory unit (103).

12. The system of claim 1, wherein said blocks of code are encrypted when received by said master processor (101), said secure processor (102) further comprising a decrypter for decrypting said encrypted blocks of code.

13. A method of making secure transmission of programming code to a computing device (100), the method comprising:
computing an authentication signature for each of one or more blocks of programming code newly received or stored in a memory unit (103) with an algorithm, said authentication signature being computed based on a numeric content of that block of programming code; and
comparing said computed authentication signature to an authentication signature transmitted or stored is association with that block of programming code, said transmitted authentication signature having been generated with said algorithm;
**characterised in that** said computing and comparing are performed with a secure processor (102) which is separate from a master processor (101) for executing said blocks of code.

14. The method of claim 13, wherein if said computed authentication signature fails to match said transmitted authentication signature, said method comprises disabling said computing device (100).

15. The method of claim 13, further comprising accessing said blocks of code in said memory unit (103) with a memory bus (104,105) for authentication by said secure processor (102) only during bus cycles in which said master processor (101) is not using said memory bus (104,105).

16. The method of claim 13, further comprising transferring said blocks of code from an interim memory (103) of said memory unit after said computed authentication signature has matched said transmitted authentication signature.

17. The method of claim 13, further comprising:
receiving an entitlement management message associated with said blocks of programming code; and
storing and executing said blocks of programming code only if said entitlement management message matches a predetermined entitlement management message stored in said computing device (100) .

18. The method of claim 13, further comprising repeatedly performing said computing and comparing to re-authenticate said blocks of programming stored in said memory unit (103).

19. The method of claim 13, further comprising decrypting said blocks of programming code which are received in an encrypted form.

## Patentansprüche

1. Ein System zur gesicherten Übertragung eines Programmiercodes an eine Rechenvorrichtung (100), wobei das System Folgendes beinhaltet:
eine Datenleitung (106) zum Empfangen von Blöcken eines Programmiercodes;
einen Hauptprozessor (101) zum Ausführen von Blöcken eines Programmiercodes, von denen jedem eine Authentifizierungssignatur zugehört, die aus einem Inhalt des Codeblocks abgeleitet ist; und
eine Speichereinheit (103) zum Speichern der Blöcke eines Programmiercodes zur Verwendung durch den Hauptprozessor (101);
**gekennzeichnet durch** einen gesicherten Prozessor (102) Innerhalb der Rechenvorrichtung (100) zur unabhängigen Berechnung einer Authentifizierungssignatur für jeden Block eines Programmiercodes und zum Zur-Übereinstimmung-Bringen der berechneten Authentifizierungssignatur mit der übertragenen oder in Verbindung mit dem Codeblock gespeicherten Authentifizierungssignatur.

2. System gemäß Anspruch 1, wobei der gesicherte Prozessor (102) die Rechenvorrichtung (100) deaktiviert, wenn die berechnete Authentifizierungssignatur nicht mit der übertragenen Authentifizierungssignatur übereinstimmt.

3. System gemäß Anspruch 1, wobei der gesicherte Prozessor (102) die Rechenvorrichtung (100) zurücksetzt, wenn die berechnete Authentifizierungssignatur nicht mit der übertragenen Authentifizierungssignatur übereinstimmt.

4. System gemäß Anspruch 1, wobei der gesicherte Prozessor (102) einen Aufruf nach autorisierter Bedienung für die Rechenvorrichtung (100) signalisiert, wenn die berechnete Authentifizierungssignatur nicht mit der übertragenen Authentifizierungssignatur übereinstimmt.

5. System gemäß Anspruch 1, wobei der Hauptprozessor (101), die Speichereinheit (103) und der gesicherte Prozessor (102) über einen Speicherbus (104, 105) untereinander verbunden sind und der gesicherte Prozessor (102) nur während Buszyklen, in denen der Hauptprozessor (101) den Speicherbus (104,105) nicht verwendet, auf die Speichereinheit (103) zugrelft.

6. Das System gemäß Anspruch 5, das ferner eine Speicherbussteuerung (109) zum Steuern des Zugriffs auf den Speicherbus (104,105) durch den hauptsächlichen (101) und den gesicherten (102) Prozessor beinhaltet.

7. System gemäß Anspruch 1, wobei:
die Speichereinheit einen Zwischenspeicher (103) und einen statischen Speicher (200) beinhaltet,
neue Blöcke eines Codes, die über die Datenleitung (106) empfangen werden, in den Zwischenspeicher (103) geschrieben werden und
die Blöcke eines Codes in den statischen Speicher (200) transferiert werden, nachdem der gesicherte Prozessor (102) die Blöcke eines Codes authentifiziert hat.

8. System gemäß Anspruch 1, das ferner eine Freigabemeldung, die den Blöcken eines Programmiercodes zugehört, beinhaltet, wobei der gesicherte Prozessor (102) eine weitere Speicherung, Verwendung oder Ausführung der Blöcke eines Programmiercodes verhindert, wenn die Freigabemeldung nicht mit einer von dem gesicherten Prozessor (102) gespeicherten vorbestimmten Freigabemeldung übereinstimmt.

9. System gemäß Anspruch 1, wobei:
die Rechenvorrichtung (100) ein Set-Top-Terminal ist, das den Hauptprozessor (101), die Speichereinheit (103) und den gesicherten Prozessor (104) einschließt, und
die Eingangsdatenieltung (106) ein Anschluss an eine Kabeifernsehantage ist.

10. System gemäß Anspruch 1, das ferner eine zweite, isolierte Speichereinheit (200) beinhaltet, die an den gesicherten Prozessor (102) angeschlossen ist.

11. System gemäß Anspruch 1, wobei der gesicherte Prozessor (102) die Blöcke eines Programmiercodes, die in der Speichereinheit (103) gespeichert sind, periodisch neu authentifiziert.

12. System gemäß Anspruch 1, wobei die Blöcke eines Codes verschlüsselt sind, wenn sie von dem Hauptprozessor (101) empfangen werden, wobei der gesicherte Prozessor (102) ferner einen Entschlüsseler zum Entschlüsseln der verschlüsselten Blöcke eines Codes beinhaltet.

13. Ein Verfahren zum Vollführen einer gesicherten Übertragung eines Programmiercodes an eine Rechenvorrichtung (100), wobei das Verfahren Folgendes beinhaltet:
Berechnen einer Authentifizierungssignatur für jeden der einen oder mehreren Blöcke eines Programmiercodes, der/die neu empfangen oder in einer Speichereinheit (103) mit einem Algorithmus gespeichert ist/sind, wobei die Authentifizierungssignatur auf der Grundlage eines numerischen Inhalts dieses Blocks eines Programmiercodes berechnet wird; und
Vergleichen der berechneten Authentifizierungssignatur mit einer Authentifizierungssignatur, die in Verbindung mit diesem Block eines Programmiercodes übertragen oder gespeichert wurde, wobei die übertragene Authentifizierungssignatur mit dem Algorithmus erzeugt worden Ist;
**dadurch gekennzeichnet, dass** die Berechnung und der Vergleich mit einem gesicherten Prozessor (102) durchgeführt werden, der von einem Hauptprozessor (101) zum Ausführen der Blöcke eines Codes getrennt ist.

14. Verfahren gemäß Anspruch 13, wobei das Verfahren die Deaktivierung der Rechenvorrichtung (100) beinhaltet, wenn die berechnete Authentifizierungssignatur nicht mit der übertragenen Authentifizierungssignatur übereinstimmt.

15. Verfahren gemäß Anspruch 13, das ferner das Zugreifen auf die Blöcke eines Codes in der Speichereinheit (103) mit einem Speicherbus (104, 105) zur Authentifizierung durch den gesicherten Prozessor (102) nur während Buszyklen, in denen der Hauptprozessor (101) den Speicherbus (104,105) nicht verwendet, beinhaltet.

16. Verfahren gemäß Anspruch 13, das ferner das Transferieren der Blöcke eines Codes aus einem Zwischenspeicher (103) der Speichereinheit beinhaltet, nachdem die berechnete Authentifizierungssignatur mit der übertragenen Authentifizierungssignatur zur Übereinstimmung gebracht worden ist.

17. Verfahren gemäß Anspruch 13, das ferner Folgendes beinhaltet:
Empfangen einer Freigabemeldung, die den Blöcken eines Programmiercodes zugehört, und
Speichern und Ausführen der Blöcke eines Programmiercodes nur dann, wenn die Freigabemeldung mit einer vorbestimmten Freigabemeldung, die in der Rechenvorrichtung (100) gespeichert ist, übereinstimmt.

18. Verfahren gemäß Anspruch 13, das ferner die wiederholte Durchführung der Berechnung und des Vergleichs zur Neuauthentifizierung der Blöcke einer Programmierung, die in der Speichereinheit (103) gespeichert sind, beinhaltet.

19. Verfahren gemäß Anspruch 13, das ferner das Entschlüsseln der Blöcke eines Programmiercodes, die in einer verschlüsselten Form empfangen werden, beinhaltet.

## Revendications

1. Un système destiné à la transmission sécurisée de code de programmation à un dispositif de calcul (100), le système comportant :
une ligne de données (106) pour recevoir des blocs de code de programmation ;
un processeur maître (101) pour exécuter des blocs de code de programmation, lesquels sont chacun associés à une signature d'authentification dérivée à partir d'un contenu dudit bloc de code ; et
une unité mémoire (103) pour stocker lesdits blocs de code de programmation destinés à être utilisés par ledit processeur maître (101) ;
**caractérisé par** un processeur sécurisé (102) au sein du dispositif de calcul (100) pour calculer de façon indépendante une signature d'authentification pour chaque dit bloc de code de programmation et opposer ladite signature d'authentification calculée à ladite signature d'authentification transmise ou stockée en association avec ce bloc de code.

2. Le système de la revendication 1, dans lequel si ladite signature d'authentification calculée ne parvient pas à correspondre à ladite signature d'authentification transmise, ledit processeur sécurisé (102) désactive ledit dispositif de calcul (100).

3. Le système de la revendication 1, dans lequel si ladite signature d'authentification calculée ne parvient pas à correspondre à ladite signature d'authentification transmise, ledit processeur sécurisé (102) réinitialise ledit dispositif de calcul (100).

4. Le système de la revendication 1, dans lequel si ladite signature d'authentification calculée ne parvient pas à correspondre à ladite signature d'authentification transmise, ledit processeur sécurisé (102) demande par signal un appel de service autorisé pour ledit dispositif de calcul (100).

5. Le système de la revendication 1, dans lequel lesdits processeur maître (101), unité mémoire (103) et processeur sécurisé (102) sont connectés entre eux par un bus mémoire (104, 105), et ledit processeur sécurisé (102) a accès à ladite unité mémoire (103) seulement lors de cycles de bus durant lesquels ledit processeur maître (101) n'utilise pas ledit bus mémoire (104, 105).

6. Le système de la revendication 5, comportant en outre un contrôleur de bus mémoire (109) pour contrôler l'accès audit bus mémoire (104, 105) par lesdits processeurs principal (101) et sécurisé (102).

7. Le système de la revendication 1, dans lequel :
ladite unité mémoire comporte une mémoire provisoire (103) et une mémoire statique (200) ;
de nouveaux blocs de code reçus sur ladite ligne de données (106) sont écrits dans ladite mémoire provisoire (103) ; et
après authentification desdits blocs de code par ledit processeur sécurisé (102), les blocs de code sont transférés dans ladite mémoire statique (200).

8. Le système de la revendication 1, comportant en outre un message de gestion de droit d'accès associé auxdits blocs de code de programmation, dans lequel ledit processeur sécurisé (102) empêchera le stockage, l'utilisation ou l'exécution plus avant desdits blocs de code de programmation à moins que ledit message de gestion de droit d'accès corresponde à un message de gestion de droit d'accès prédéterminé stocké par ledit processeur sécurisé (102).

9. Le système de la revendication 1, dans lequel:
ledit dispositif de calcul (100) est un terminal set-top incorporant lesdits processeur maître (101), unité mémoire (103) et processeur sécurisé (104) ; et
ladite ligne de données d'entrée (106) est une connexion à un système de télévision par câble.

10. Le système de la revendication 1, comportant en outre une deuxième unité mémoire isolée (200) connectée audit processeur sécurisé (102).

11. Le système de la revendication 1, dans lequel ledit processeur sécurisé (102) ré-authentifie de façon périodique lesdits blocs de code de programmation stockés dans ladite unité mémoire (103).

12. Le système de la revendication 1, dans lequel lesdits blocs de code sont encryptés lorsqu'ils sont reçus par ledit processeur maître décrypteur pour décrypter lesdits blocs de code encryptés.

13. Un procédé pour réaliser la transmission sécurisée de code de programmation à un dispositif de calcul (100), le procédé comportant :
le calcul d'une signature d'authentification pour chaque bloc parmi un ou plusieurs blocs de code de programmation nouvellement reçus ou stockés dans une unité mémoire (103) avec un algorithme, ladite signature d'authentification étant calculée sur la base d'un contenu numérique de ce bloc de code de programmation ; et
la comparaison de ladite signature d'authentification calculée et d'une signature d'authentification transmise ou stockée en association avec ce bloc de code de programmation, ladite signature d'authentification transmise ayant été générée avec ledit algorithme ;
**caractérisé en ce que** ledit calcul et ladite comparaison sont effectués avec un processeur sécurisé (102) qui est distinct d'un processeur maître (101) destiné à exécuter lesdits blocs de code.

14. Le procédé de la revendication 13, dans lequel si ladite signature d'authentification calculée ne parvient pas à correspondre à ladite signature d'authentification transmise, ledit procédé comporte la désactivation dudit dispositif de calcul (100).

15. Le procédé de la revendication 13, comportant en outre l'accès auxdits blocs de code dans ladite unité mémoire (103) avec un bus mémoire (104, 105) pour authentification par ledit processeur sécurisé (102) seulement lors de cycles de bus durant lesquels ledit processeur maître (101) n'utilise pas ledit bus mémoire (104, 105).

16. Le procédé de la revendication 13, comportant en outre le transfert desdits blocs de code à partir d'une mémoire provisoire (103) de ladite unité mémoire après qu'il y a eu correspondance entre ladite signature d'authentification calculée et ladite signature d'authentification transmise.

17. Le procédé de la revendication 13, comportant en outre :
la réception d'un message de gestion de droit d'accès associé auxdits blocs de code de programmation ; et
le stockage et l'exécution desdits blocs de code de programmation seulement si ledit message de gestion de droit d'accès correspond à un message de gestion de droit d'accès prédéterminé stocké dans ledit dispositif de calcul (100).

18. Le procédé de la revendication 13, comportant en outre d'effectuer à plusieurs reprises lesdits calcul et comparaison pour ré-authentifier lesdits blocs de programmation stockés dans ladite unité mémoire (103).

19. Le procédé de la revendication 13, comportant en outre ie décryptage desdits blocs de code de programmation qui sont reçus sous une forme encryptée.
